Europäisches Patentamt

European Patent Office

Office européen des brevets

(11) Publication number: **0 444 624 A2**

## EUROPEAN PATENT APPLICATION

(21) Application number: 91102851.2

(51) Int. Cl.⁵: **G06F 12/02**

(22) Date of filing: 26.02.91

(30) Priority: 26.02.90 JP 46087/90

(43) Date of publication of application:
**04.09.91 Bulletin 91/36**

(84) Designated Contracting States:
**DE FR GB**

(71) Applicant: **NEC CORPORATION**
**7-1, Shiba 5-chome Minato-ku**
**Tokyo 108-01(JP)**

(72) Inventor: **Yabui, Rika, c/o NEC Corporation**
**7-1, Shiba 5-chome**
**Minato-ku, Tokyo(JP)**
Inventor: **Miura, Katsumi, c/o NEC Corporation**
**7-1, Shiba 5-chome**
**Minato-ku, Tokyo(JP)**

(74) Representative: **Betten & Resch**
**Reichenbachstrasse 19**
**W-8000 München 5(DE)**

(54) **Apparatus for generating an address to access a memory.**

(57) A physical address is generated by adding offset and segment addresses. In this addition, a predetermined bit shift which is varied dependent on a shift amount signal is provided between the offset and segment addresses. Consequently, physical addresses of various bit lengths are obtained to access memory spaces of various bytes.

*FIG.5*

FIELD OF THE INVENTION

This invention relates to an apparatus for generating an address to access a memory, and more particularly to a micro-computer utilizing a segment mode for access of a memory.

BACKGROUND OF THE INVENTION

A conventional apparatus utilizing a segment mode for generating an address to access a memory comprises a physical address calculation unit for generating a physical address of 20 bits from a segment address of 16 bits and an offset address of 16 bits. In this generation of the physical address, lower four bits are added to the segment address of 16 bits, and upper four bits are added to the offset address of 16 bits, so that the segment and offset addresses are provided with a shift of 4 bits therebetween and are added to generate the physical address of 20 bits. Thus, a memory space of 1 M bytes can be accessed by the physical address of 20 bits.

In this segment mode, a memory space is divided into a plurality of logic segments having arbitrary memory sizes. In the logic segments, a start address of a corresponding logic segment is a segment value which is a segment address, and an offset address thereof is an offset value from the start address. Thus, a physical address is generated by the addition of the segment and offset addresses.

However, the conventional apparatus utilizing the segment mode for generating an address to access a memory has a disadvantage in that a size of a memory space which is accessed by a physical address is fixed, because the number of bits which are added to a segment address and an offset address, that is, a shift amount provided between the two addresses is fixed. As a result, it is impossible that the size of the memory space is increased as much as desired by customers.

SUMMARY OF THE INVENTION

Accordingly, it is an object of the invention to provide an apparatus for generating an address signal to access a memory, in which a space of a memory space which is accessed by a physical address can be varied.

According to this invention, an apparatus for generating an address to access a memory, comprises:

means for generating an offset address by receiving a first control signal generated by decoding a command code;

means for generating a segment address by receiving a second control signal generated by a predetermined command included in the command code; means for providing a shift of predetermined bits between the offset and segment addresses, the shift being determined to be varied dependent on a third control signal generated by decoding the command code; and

means for adding the offset and segment addresses having the shift therebetween to generate a physical address.

BRIEF DESCRIPTION OF THE DRAWINGS

This invention will be explained in more detail in conjunction with appended drawings, wherein:

Fig. 1 is a block diagram showing a conventional apparatus for generating an address to access a memory;

Fig. 2 is a block diagram showing a physical address calculation processor in the conventional apparatus in Fig. 1;

Figs. 3 and 4 are explanatory diagrams showing the addition of offset and segment addresses in the physical address calculation processor in Fig. 2;

Fig. 5 is a block diagram showing an apparatus for generating an address to access a memory in a first preferred embodiment according to the invention;

Fig. 6 is a block diagram showing a segment address selector and a physical address calculation processor in the first preferred embodiment;

Figs. 7 and 8 are explanatory diagrams showing the addition of offset and segment addresses in the physical address calculation processor in Fig. 6;

Fig. 9 is a block diagram showing an apparatus for generating an address to access a memory in a second preferred embodiment according to the invention;

Fig. 10 is a block diagram showing a segment address selector and a physical address calculation processor in the second preferred embodiment;

Figs. 11 to 13 are explanatory diagrams showing the addition of offset and segment addresses in the address calculation processor in Fig. 10.

DESCRIPTION OF THE PREFERRED EMBODIMENTS

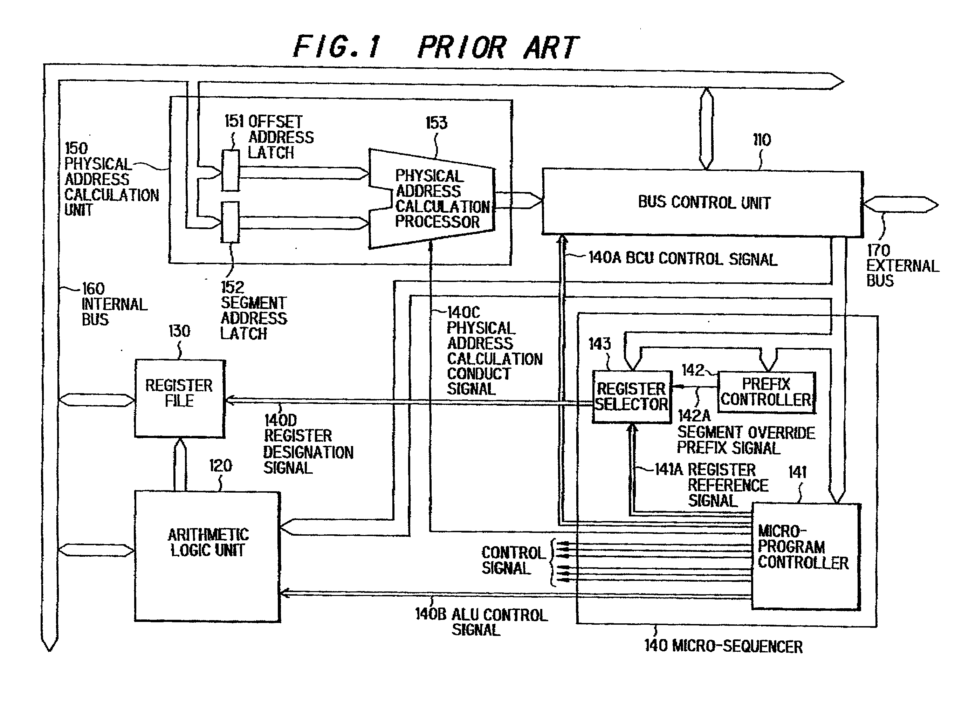

Before explaining an apparatus for generating an address to access a memory in the first preferred embodiment according to the invention, the aforementioned conventional apparatus utilizing the segment mode will be explained in Fig. 1.

This conventional apparatus comprises a bus control unit 110 for controlling buses by receiving a control signal 140A, a micro-sequencer 140 for generating control signals including the control signal 140A to control internal units in a micro-program control method by reading command codes from the bus control unit 110, to which the command codes are written from a memory (not shown) by the bus control of the bus control unit 110, an arithmetic logic unit 120 for carrying out various arithmetics including the calculation of an offset address by receiving a control signal 140B from the micro-sequencer 140, a physical address calculation unit 150 for generating a physical address in the addition of the offset address and a segment address (to be explained later) by receiving a calculation conduct signal 140C from the micro-sequencer 140, and a register file 130 having a set of registers, one of which stores the segment address and is selected by a register designation signal 140D.

The bus control unit 110, the arithmetic logic unit 120, the register file 130, and the physical address calculation unit 150 are connected to each other by an internal bus 160, and the bus control unit 110 is connected to the memory, etc. by an external bus 170.

The micro-sequencer 140 comprises a micro-program controller 141 for generating control signals including the control signals 140A, 140B and 140C, and a register reference signal 141A in the micro-program method, a prefix controller 142 for carrying out prefix operation, when a command code supplied from the bus control unit 110 is a prefix command, and a register selector 143 for selecting one register in the register file 130 by receiving a segment override prefix signal 142A generated in case that the prefix command supplied to the prefix controller 142 is a segment override prefix command, the register reference signal 141A, and a command code supplied from the bus control unit 110.

The physical address calculation unit 150 comprises an offset address latch 151 for latching an offset address supplied from the arithmetic logic unit 120, a segment address latch 152 for latching a segment address supplied from a register of the register file 130 selected by the register designation signal 140D supplied from the register selector 143, and a physical address calculation processor 153 for adding contents of the offset and segment address latchs 151 and 152 to generate a physical address.

In the micro-sequencer 140, a prefix command which is included in command codes supplied from the bus control unit 110 to the prefix controller 142 is pre-positioned to a calculation command or a transfer command to change a basic operation of the command, and is defined as a modified command. In a transfer command of data between a memory and a register, for instance, a segment override prefix command is set to replace a segment register in the register file 130 by another segment register therein.

In operation, it is assumed that a memory space is of 1 M bytes, and a segment address and an offset address are of 16 bits, respectively, in the segment mode, and a physical address is of 20 bits.

A memory operation command including a segment override prefix command is supplied from the memory to the micro-sequencer 140 by the bus control of the bus control unit 110. In the micro-sequencer 140, a segment override prefix signal is supplied from the prefix controller 142 to the register selector 143 by the segment override prefix command.

On the other hand, a register reference signal 141A is supplied from the micro-program controller 141 to the register selector 143, so that a register designation signal 140D is supplied from the register selector 143 to the register file 130 to select a predetermined segment register in accordance with the segment override prefix signal 142A, the register reference signal 141A, and a command code of the segment override prefix command. Consequently, a segment address is read from the selected segment register of the register file 130, and is supplied therefrom via the internal bus 160 to the physical address calculation unit 150, in which the segment address is latched in the segment address latch 152.

Simultaneously, an offset address is calculated in the arithmetic logic unit 120 in reference to a portion of command codes written into the bus control unit 110 by receiving a control signal 140B supplied from the micro-program controller 141. The calculated offset address is supplied from the arithmetic logic unit 120 through the internal bus 120 to the physical address calculation unit 150, in which the offset address is latched in the offset address latch 151.

In the physical address calculation unit 150, the offset address latched in the offset address latch 151 and the segment address latched in the segment address latch 152 are added in the physical address calculation processor 153 to provide a physical address by receiving a physical address calculation conduct signal 140C.

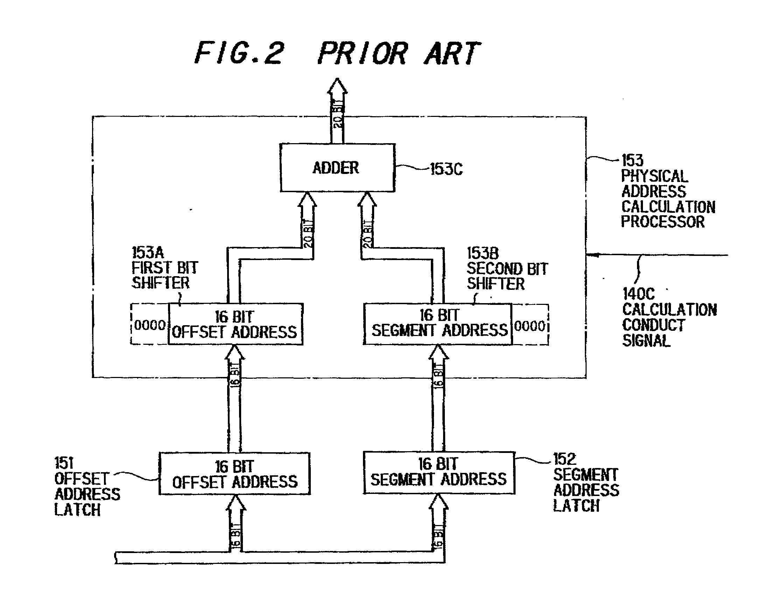

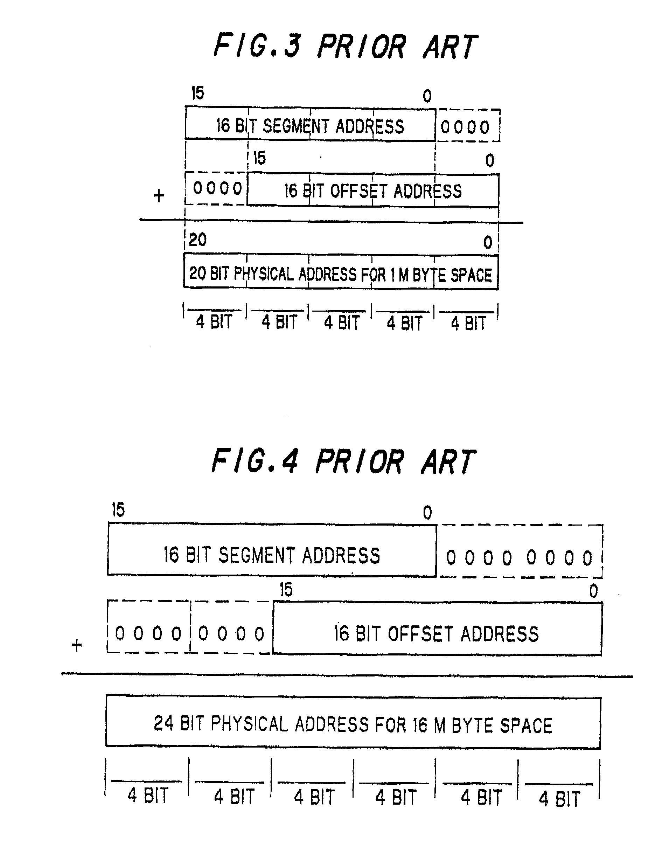

Fig. 2 shows the physical address calculation processor 153 which comprises first and second bit shifters 153A and 153B for adding upper and lower four bits to the offset and segment addresses, correspondingly, and an adder 153C for adding the bit-shifted offset and segment addresses to provide the physical address. In this physical address calculation processor 153, the upper four bits are added to the offset address of 16 bits supplied from the offset address latch 151 in the first bit shifter 153A to provide the bit-shifted offset address of 20 bits, and the lower four bits are added to the segment address of 16 bits supplied from the segment address latch 152 in the second bit shifter 153A to provide the bit shifted segment address of 20 bits, so that the bit-shifted offset and segment addresses are added in the adder 153C to provide the physical address of 20 bits, as shown in Fig. 3, by which a memory space of 1 M bytes is accessed. Thus, the memory is accessed in accordance with the physical address of 20bits by the bus control unit 110.

In the shift between offset and segment addresses, if eight bits are shifted as shown in Fig. 4, a physical address of 24 bits is generated to access a memory space of 16 M bytes.

At any rate, the number of shifting bits is fixed in the conventional apparatus. Therefore, the aforementioned disadvantage occurs therein.

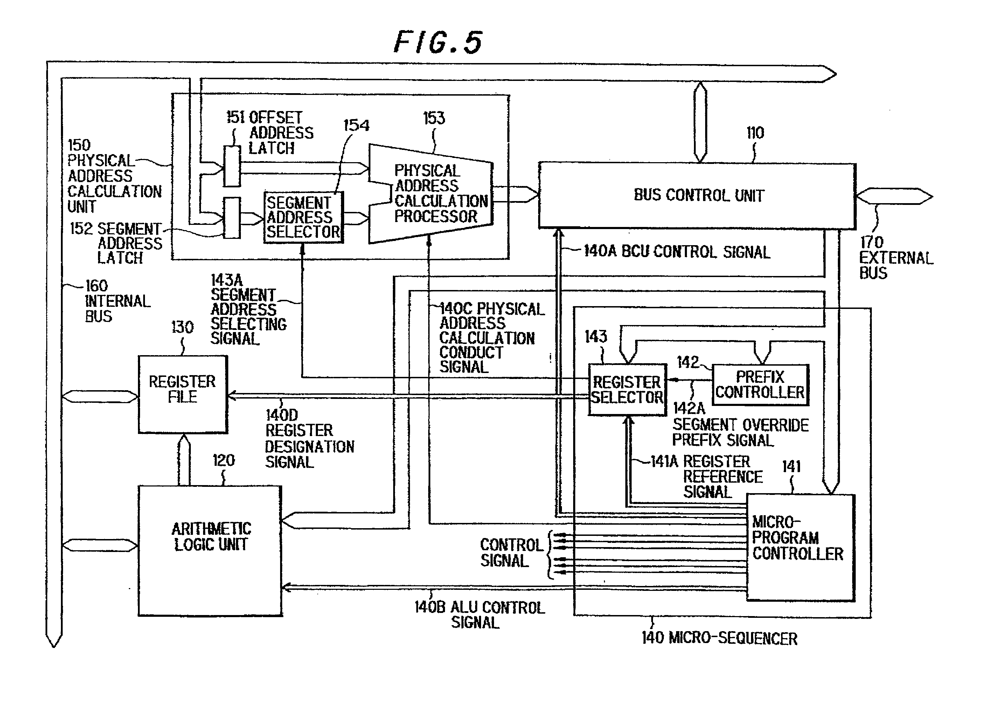

Next, an apparatus for generating an address signal to access a memory in the first preferred embodiment according to the invention will be explained in Fig. 5, wherein like parts are indicated by like reference numerals as used in Fig. 1.

In this address signal generating apparatus, the physical address calculation unit 150 comprises a segment address selector 154 for selecting one of first and second bit-shifted segment addresses by receiving a segment address selecting signal 143A from the register selector 143 in the micro-sequenser 140, in addition to the offset and segment address latchs 151 and 152 and the physical address calculation processor 153 as explained in Fig. 1. The rest of this apparatus is the same as in Fig. 1.

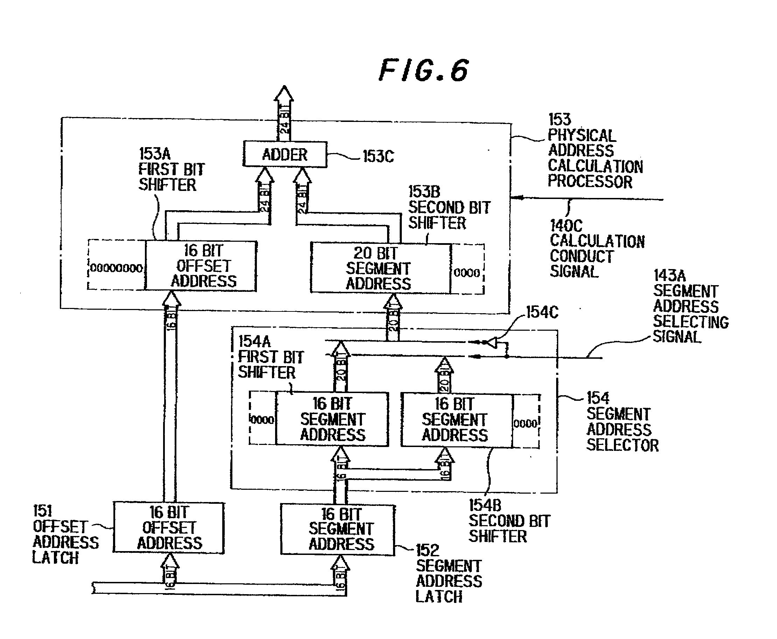

Fig. 6 shows the physical address calculation unit 150 which comprises the offset address latch 151, the segment address latch 152, the physical address calculation processor 153, and the segment address selector 154, wherein the segment address selector 154 includes a first bit shifter 154A for adding upper bits to the segment address of 16 bits, a second bit shifter 154B for adding lower bits to the segment address of 16 bits, and an inverter 154C for inverting the segment address selecting signal 143A supplied from the register selector 143.

In this first preferred embodiment, the register file 130 comprises a set of registers, among which a first segment register effective for accessing a memory space of the least significant 1 M bytes of 16 M bytes, and a second segment register effective for accessing a memory space of 16 M bytes.

In operation, it is assumed that the first segment register is used.

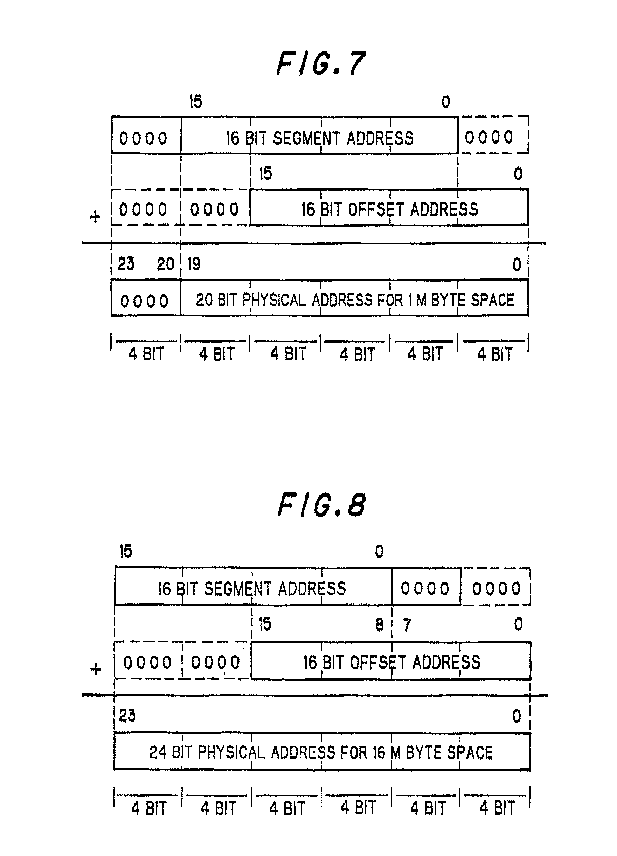

In the same manner as in the conventional apparatus, the offset and segment addresses of 16 bits are latched in the offset and segment address latchs 151 and 152, respectively. Then, the segment address is supplied from the segment address latch 152 to the segment address selector 154, in which upper four bits are added to the segment address in the first bit shifter 154A to provide a first bit-shifted segment address of 20 bits, and lower four bits are added to the segment address in the second bit shifter 154B to provide a second bit-shifted segment address of 20 bits. Here, it is assumed that the segment address selecting signal is "0". Therefore, the first bit-shifted segment address is supplied from the bit shifter 154A to the physical address calculation processor 153. In the physical address calculation processor 153, upper eight bits are added to the offset address of 16 bits supplied from the offset address latch 151 in the first bit shifter 153A to provide a bit-shifted offset address of 24 bits, and lower four bits are added to the first bit-shifted segment address of 20 bits supplied from the segment address selector 154 in the second bit shifter 153B to provide a third bit-shifted segment address of 24 bits. Then, the bit shifted offset address and the third bit-shifted segment address having a shift of 4 bits therebetween are added in the adder 153C to provide a physical address of 20 bits, by which a memory space of 1 M bytes is accessed, as shown in Fig. 7.

Next, it is assumed that the second segment register is used in operation in the first preferred embodiment. In case of using the second segment register, a segment address selecting signal 143A of "1" is supplied to the segment address selector 154, so that the second bit-shifted segment address of 20 bit is supplied from the second bit shifter 154B of the segment address selector 154 to the physical address calculation processor 153, in which the upper eight bits are added in the first bit shifter 153A to the offset address supplied from the offset address latch 151, and lower four bits are added in the second bit shifter 153B to the second bit shifted segment address. Then, the offset and segment addresses having a shift of 8 bits therebetween supplied from the first and second bit shifters 153A and 153B added in the adder 153C to provide a physical address of 24 bits, by which a memory space of 16 M bytes is accessed, as shown in Fig. 8.

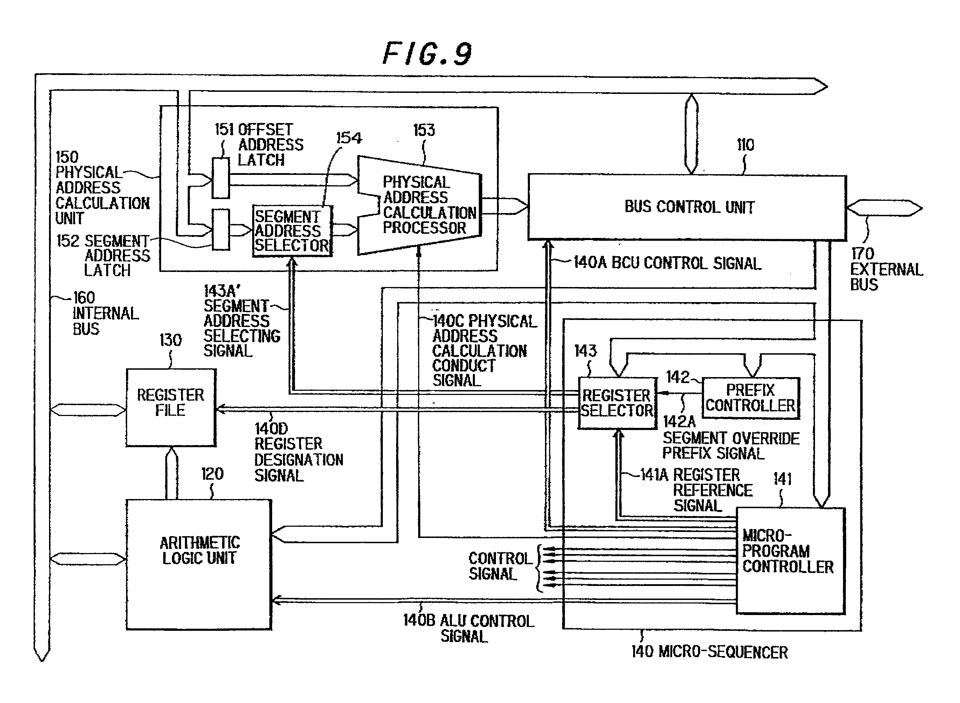

Fig. 9 shows an apparatus for generating an address to access a memory in the second preferred embodiment according to the invention, wherein like parts are indicated by like reference numerals as used in Fig. 5.

In this apparatus, the register file 130 comprises a set of registers including a plurality of segment registers such as a first segment register effective for accessing a memory space of 1 M bytes, a second segment register effective for accessing a memory space of 16 M bytes, a third segment register effective for accessing a memory space of 256 M bytes, etc., and the segment address selector 154 of the physical address calculation unit 150 is controlled by a segment address selecting signal 143A' of 2 bits supplied from the register selector 143 of the micro-sequencer 140.

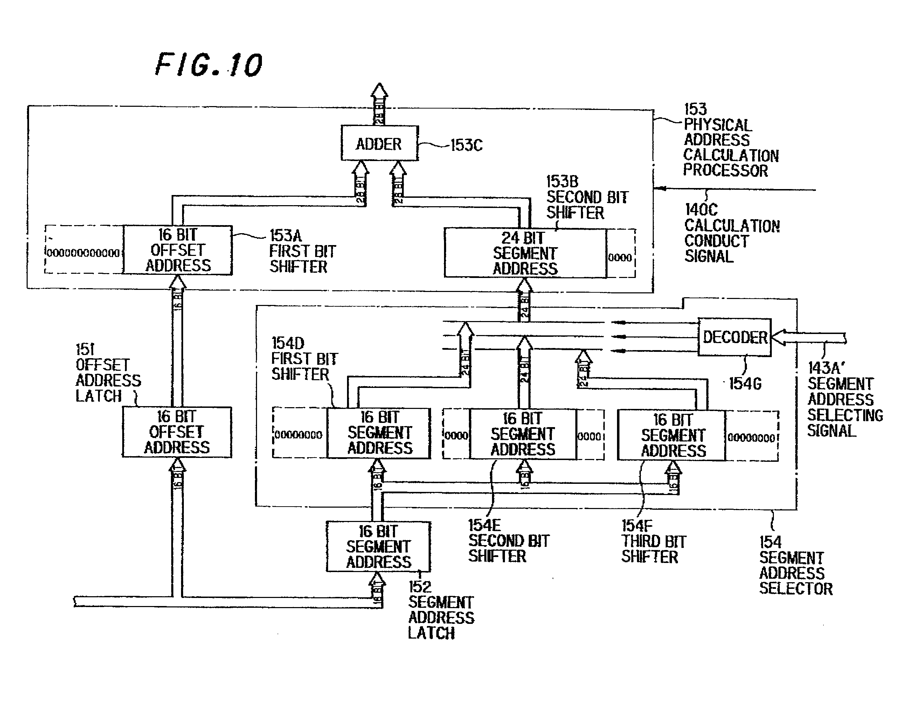

Fig. 10 shows the segment address selector 154 which comprises first to third bit shifters 154D, 154E and 154F, and a decoder 154G for decoding the segment address selecting signal 143A'.

In operation, it is assumed that the first segment register is used, and the segment address selecting signal 143A' is "00".

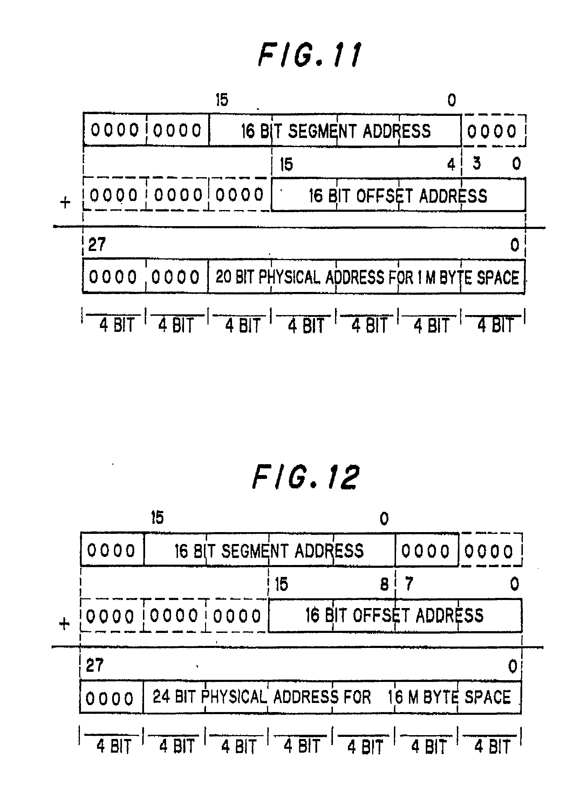

In the offset and segment address latchs 151 and 152, offset and segment addresses each having 16 bits are set to be supplied to the bit shifter 153A of the physical address calculation processor 153 and to the first to third bit shifters 154D, 154E and 154F of the segment address selector 154, correspondingly. In the segment address selector 154, the first bit shifter 154D is selected as a result of decoding the selecting signal 143A' of "00", so that the segment address of 24 bits having added upper 8 bits is supplied to the second bit shifter 153B of the physical address calculation processor 153, in which lower 4 bits are added thereto. On the other hand, upper 12 bits are added to the offset address of 16 bits in the first bit shifter 153A, so that the offset and segment addresses having a shift of 4 bits are added in the adder 153C to provide a physical address of 20 bits, by which a memory space of 1 M bytes is accessed, as shown in Fig. 11. This is carried out by the physical address calculation conduct signal 140C.

Secondly, it is assumed that the second segment register is used, and the segment address selecting signal 143A' of "01" is supplied to the decoder 154G of the segment address selector 154. As a result, the second bit shifter 154E is selected to provide the segment address of 24 bits having added upper and lower 4 bits to the second bit shifter 153B of the physical address calculation processor 153. Then, the offset and segment addresses having a shift of 8 bits are added in the adder 153C to provide a physical address of 24 bits, by which a memory space of 16 M bytes is accessed, as shown in Fig. 12.

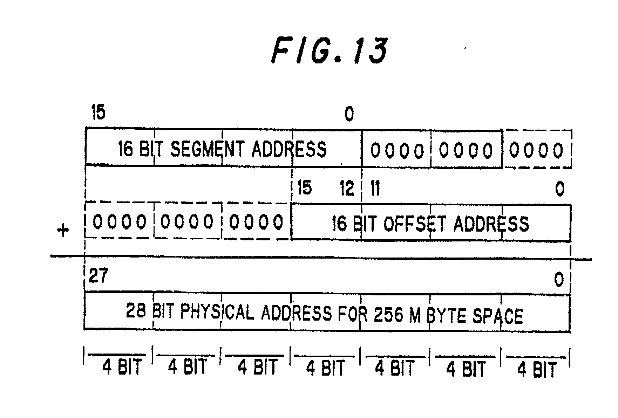

Thirdly, it is assumed that the third segment register is used, and the segment address selecting signal 143A' of "10" is supplied to the decoder 154G of the segment address selector 154. As a result, the third bit shifter 154F is selected to provide the segment address of 24 bits having added lower 8 bits to the second bit shifter 153B of the physical address calculation processor 153. Thus, the offset and segment addresses having a shift of 12 bits are added in the adder 153C to provide a physical address of 28 bits, by which a memory space of 256 M bytes is accessed, as shown in Fig. 13.

As explained in the first and second preferred embodiments, the number of bits for a shift between offset and segment addresses can be varied dependent on a segment override prefix command to access memories of various sizes by use of programs. Consequently, a program prepared for accessing a small memory space can be used for accessing a large memory space. At the same time, the program prepared for accessing the small memory space can be used in combination with a program for a large memory space.

Although the invention has been described with respect to specific embodiment for complete and clear disclosure, the appended claims are not to be thus limited but are to be construed as embodying all modification and alternative constructions that may occur to one skilled in the art which fairly fall within the basic teaching herein set forth.

## Claims

1. An apparatus for generating an address to access a memory, comprising:

   means for generating an offset address by receiving a first control signal generated by decoding a command code;

   means for generating a segment address by receiving a second control signal generated by a predetermined command included in said command code;

   means for providing a shift of predetermined bits between said offset and segment addresses, said shift being determined to be varied dependent on a third control signal generated by decoding said command code; and

   means for adding said offset and segment addresses having said shift therebetween to generate a physical address.

2. An apparatus for generating an address to access a memory, according to claim 1, wherein:

   said shift providing means including a plurality of bit shifters providing different bit shifts to said segment address; and

   a decoder for decoding said third control signal to select one of said different bit shifts.

3. An apparatus for generating an address to access a memory, according to claim 1, wherein:

   said adding means provides an additional bit shift to said shift of predetermined bits prior to an addition of said offset and segment addresses.

4. An apparatus for generating an address to access a memory, according to claim 1, wherein:

said predetermined command in said segment address generating means is a segment override prefix command.

# FIG.1 PRIOR ART

151 OFFSET ADDRESS LATCH

153

150 PHYSICAL ADDRESS CALCULATION UNIT

PHYSICAL ADDRESS CALCULATION PROCESSOR

110

BUS CONTROL UNIT

170 EXTERNAL BUS

140A BCU CONTROL SIGNAL

160 INTERNAL BUS

152 SEGMENT ADDRESS LATCH

140C PHYSICAL ADDRESS CALCULATION CONDUCT SIGNAL

143

142

PREFIX CONTROLLER

130

REGISTER FILE

REGISTER SELECTOR

142A SEGMENT OVERRIDE PREFIX SIGNAL

140D REGISTER DESIGNATION SIGNAL

141A REGISTER REFERENCE SIGNAL

141

120

ARITHMETIC LOGIC UNIT

CONTROL SIGNAL

MICRO-PROGRAM CONTROLLER

140B ALU CONTROL SIGNAL

140 MICRO-SEQUENCER

EP 0 444 624 A2

FIG.2  PRIOR ART

153
PHYSICAL
ADDRESS
CALCULATION
PROCESSOR

ADDER —153C

153A
FIRST BIT
SHIFTER

153B
SECOND BIT
SHIFTER

140C
CALCULATION
CONDUCT
SIGNAL

0000 | 16 BIT
OFFSET ADDRESS

16 BIT
SEGMENT ADDRESS | 0000

151
OFFSET
ADDRESS
LATCH

16 BIT
OFFSET ADDRESS

16 BIT
SEGMENT ADDRESS

152
SEGMENT
ADDRESS
LATCH

EP 0 444 624 A2

8

## FIG.3 PRIOR ART

15                    0

| 16 BIT SEGMENT ADDRESS | 0 0 0 0 |

15                    0

+ | 0 0 0 0 | 16 BIT OFFSET ADDRESS |

20                    0

| 20 BIT PHYSICAL ADDRESS FOR 1 M BYTE SPACE |

4 BIT   4 BIT   4 BIT   4 BIT   4 BIT

## FIG.4 PRIOR ART

15                    0

| 16 BIT SEGMENT ADDRESS | 0 0 0 0 0 0 0 0 |

15                    0

+ | 0 0 0 0 | 0 0 0 0 | 16 BIT OFFSET ADDRESS |

| 24 BIT PHYSICAL ADDRESS FOR 16 M BYTE SPACE |

4 BIT   4 BIT   4 BIT   4 BIT   4 BIT   4 BIT

FIG.5

FIG.6

## FIG.7

| | 15 | | 0 |
|---|---|---|---|
| 0 0 0 0 | 16 BIT SEGMENT ADDRESS | | 0 0 0 0 |

| | | 15 | 0 |
|---|---|---|---|
| + | 0 0 0 0 | 0 0 0 0 | 16 BIT OFFSET ADDRESS |

| | 23 20 | 19 | 0 |
|---|---|---|---|
| | 0 0 0 0 | 20 BIT PHYSICAL ADDRESS FOR 1 M BYTE SPACE | |

4 BIT | 4 BIT | 4 BIT | 4 BIT | 4 BIT | 4 BIT

## FIG.8

| 15 | | 0 |
|---|---|---|
| 16 BIT SEGMENT ADDRESS | 0 0 0 0 | 0 0 0 0 |

| | | 15 8 | 7 0 |
|---|---|---|---|
| + | 0 0 0 0 | 0 0 0 0 | 16 BIT OFFSET ADDRESS |

| 23 | 0 |
|---|---|
| 24 BIT PHYSICAL ADDRESS FOR 16 M BYTE SPACE | |

4 BIT | 4 BIT | 4 BIT | 4 BIT | 4 BIT | 4 BIT

# FIG.9

EP 0 444 624 A2

FIG.10

# FIG.11

# FIG.12

# FIG.13